# EUROPEAN PATENT SPECIFICATION

(11) **EP 2 977 854 B1**
(45) Date of publication and mention of the grant of the patent: **31.07.2019**
(21) Application number: 14814534.5
(22) Date of filing: 28.05.2014
(51) Int. Cl.: G06F 1/32

(54) **METHOD, APPARATUS, AND USER TERMINAL FOR REMOVING MALICIOUS POWER CONSUMING APPLICATION**
VERFAHREN, VORRICHTUNG UND BENUTZERENDGERÄT ZUR ENTFERNUNG EINER BÖSARTIGEN STROMVERBRAUCHENDEN ANWENDUNG
PROCÉDÉ, APPAREIL ET TERMINAL UTILISATEUR POUR SUPPRIMER UNE APPLICATION CONSOMMATRICE D'ÉNERGIE MALVEILLANTE

(30) Priority: 17.06.2013 CN 201310239851
(43) Date of publication of application: 27.01.2016
(73) Proprietor: Huawei Technologies Co., Ltd., Longgang District Shenzhen, Guangdong 518129 (CN)
(72) Inventor: GOU, Junwei, Shenzhen Guangdong 518129 (CN); LI, Wei, Shenzhen Guangdong 518129 (CN); ZHUANG, Zhishan, Shenzhen Guangdong 518129 (CN)
(74) Representative: Isarpatent
(86) International application number: PCT/CN2014/078623
(87) International publication number: WO 2014/201945

(56) References cited:
- EP-A1- 2 390 758
- WO-A2-2011/020060
- CN-A- 102 495 761
- CN-A- 102 498 739
- CN-A- 102 841 672
- CN-A- 103 037 108
- CN-A- 103 049 319
- CN-A- 103 324 519
- US-A1- 2012 210 150
- ABHINAV PATHAK ET AL: "Where is the energy spent inside my app?", PROCEEDINGS OF THE 7TH ACM EUROPEAN CONFERENCE ON COMPUTER SYSTEMS, EUROSYS '12, 13 March 2012 (2012-03-13), pages 29-42, XP055269549, New York, New York, USA DOI: 10.1145/2168836.2168841 ISBN: 978-1-4503-1223-3
- SOUMYA KANTI DATTA ET AL: "Android power management: Current and future trends", ENABLING TECHNOLOGIES FOR SMARTPHONE AND INTERNET OF THINGS (ETSIOT), 2012 FIRST IEEE WORKSHOP ON, IEEE, 18 June 2012 (2012-06-18), pages 48-53, XP032242778, DOI: 10.1109/ETSIOT.2012.6311253 ISBN: 978-1-4673-2555-4

## Description

### TECHNICAL FIELD

The present invention relates to the field of user terminal devices, and in particular, to a method and an apparatus for clearing a malicious power-consuming application, and a user terminal.

### BACKGROUND

At present, for many user terminals, especially intelligent terminals, due to improved processing capabilities, increasingly big screens, and increasingly high resolution, as well as high-speed wireless networks such as WIFI, 3G, and LTE networks that are supported, a problem of severe power consumption generally exits. For example, longest standby time of many smart phones or tablet computers is generally shorter than one day, and users need to frequently charge them to ensure normal use, which results in great inconvenience.

In addition, at present, an intelligent terminal can support multiple applications, while some open application markets are full of undesirable applications. After a user downloads and installs these applications, these applications improperly occupy system resources of the intelligent terminal, including occupying the CPU for a long time, maintaining the system in an active state for a long time, consuming traffic secretly in the background, using various sensors secretly, and the like. Therefore, after the user installs these applications, power consumption rises due to malicious power consumption of these applications, thereby further reducing a battery endurance capability, and reducing user experience.

An existing intelligent terminal generally guides the user to stop or uninstall applications with relatively high power consumption in a manner of collecting statistics on power consumption of all applications on the intelligent terminal to rank applications with high power consumption.

For such a manner, an application covered in the ranking may be one that is desired and frequently used by the user, for example, an online video application frequently used by the user. This application frequently uses the CPU due to video decoding, online video watching requires Internet connection and consumes many network resources, and usually screen brightness is relatively high when the user watches a video. Such an application naturally has high power consumption; according to the manner of the prior art, this application is often ranked high among power-consuming applications. From another point of view, this ranking manner in the prior art cannot accurately identify undesirable applications that consume power maliciously, and therefore cannot effectively avoid impact of these undesirable applications on the battery endurance capability of the intelligent terminal.

EP 2 390 758 A1 relates to management of applications executed in a portable terminal for preventing battery power consumption and degradation of system performance due to the system resources being utilized by applications being executed, while providing multi-tasking functions through a plurality of applications.

ABHINAV PATHAK ET AL, "Where is the energy spent inside my app?", PROCEEDINGS OF THE 7TH ACM EUROPEAN CONFERENCE ON COMPUTER SYSTEMS, EUROSYS '12, New York, New York, USA, 13.03.2012, doi:10.1145/2168836.2168841, ISBN 978-1-4503-1223-3, PAGE 29 - 42, 1-13 p. 31 discloses accounting energy consumption due to wakelocks to track down wakelock bugs.

### SUMMARY

Embodiments of the present invention provide a method and an apparatus for clearing a malicious power-consuming application, and a user terminal, which are used to accurately identify and clear a malicious power-consuming application, to improve a battery endurance capability of an intelligent terminal.

According to a first aspect, an embodiment of the present invention provides a method for clearing a malicious power-consuming application, as defined in claim 1.

With reference to the first aspect, in a first possible implementation manner, the calculating background working power consumption of each application that is running in a user terminal specifically includes:
starting from a moment when a last time of charging the user terminal ends, for each running application, periodically calculating, according to the first period, power consumption during occupation of a CPU of the user terminal, power consumption during holding of a wakelock, and power consumption during occurrence of data traffic when the running application works in the background; and
calculating a sum of the power consumption during the occupation of the CPU of the user terminal, the power consumption during the holding of the wakelock, and the power consumption during the occurrence of the data traffic, as the background working power consumption of each running application
wherein instructing the user to clear the application includes:
   ranking determined malicious power-consuming applications according to the power consumption or the wakelock occupying time, to generate a list of the malicious power-consuming applications, and sending, to the user, a notification message carrying the list of the malicious power-consuming applications;
   when receiving an instruction for ignoring the malicious power-consuming applications that is returned by the user, using malicious power-consuming applications that are selected by the user to be ignored in processing to update a locally saved list of applications selected by the user to be ignored in processing; or
   when receiving an instruction for clearing the malicious power-consuming applications that is returned by the user, stopping running or uninstalling malicious power-consuming applications that are selected by the user, and marking the malicious power-consuming applications as having been manually cleared, and
      wherein each list of malicious power-consuming applications detected and generated according to a period is saved for a set time, and is deleted after the set time elapses;
      before the notification message carrying the list of the malicious power-consuming applications is sent, a saved list of malicious power-consuming applications generated in this period is compared with a list of malicious power-consuming applications generated in a previous period, and if the two lists include same malicious power-consuming applications, sending of the notification message is suspended; and
   if an interval between a moment when the notification message carrying the list of the malicious power-consuming applications is sent this time and a moment when the notification message carrying the list of the malicious power-consuming applications is sent a previous time is less than a time interval.

With reference to the first possible implementation manner of the first aspect, in a second possible implementation manner, the calculating power consumption during occupation of a CPU of the user terminal when the running application works in the background specifically includes:
for each application, calculating a product of an accumulated working duration for which the application works in the background and occupies the CPU and unit-time power consumption of a corresponding frequency, to obtain the power consumption during the occupation of the CPU of the user terminal when the application works in the background;
the calculating power consumption during holding of a wakelock when the application works in the background specifically includes:
   for each application, calculating a product of an accumulated duration for which the CPU of the user terminal is IDLE when the application works in the background and unit-time power consumption when the CPU of the user terminal is IDLE, to obtain the power consumption during the holding of the wakelock when the application works in the background; and
   the calculating power consumption during occurrence of data traffic when the application works in the background specifically includes:
      for each application, calculating a product of a quantity of bytes of accumulated data traffic generated when the application works in the background and power consumption of a single byte, to obtain the power consumption during the occurrence of the data traffic when the application works in the background.

With reference to the first aspect, in a third possible implementation manner, the wakelock occupying time of each application in the user terminal in the case in which the screen is turned off is detected by using a system framework layer.

With reference to the first to third possible implementation manners of the first aspect, in a fourth possible implementation manner, the first period and the second period are timed according to a working period excluding a sleep period of the CPU.

According to a second aspect, an embodiment of the present invention provides an apparatus for clearing a malicious power-consuming application, as defined in claim 6.

With reference to the second aspect, in a first possible implementation manner, the calculating module is specifically configured to: starting from a moment when a last time of charging the user terminal ends, for each running application, periodically calculate, according to the first period, power consumption during occupation of a CPU of the user terminal, power consumption during holding of a wakelock, and power consumption during occurrence of data traffic when the running application works in the background; and calculate a sum of the power consumption during the occupation of the CPU of the user terminal, the power consumption during the holding of the wakelock, and the power consumption during the occurrence of the data traffic, as the background working power consumption of each running application.

With reference to the first possible implementation manner of the second aspect, in a second possible implementation manner, the calculating module is specifically configured to: for each application, calculate a product of an accumulated working duration for which the application works in the background and occupies the CPU and unit-time power consumption of a corresponding frequency, to obtain the power consumption during the occupation of the CPU of the user terminal when the application works in the background; for each application, calculate a product of an accumulated duration for which the CPU of the user terminal is IDLE when the application works in the background and unit-time power consumption when the CPU of the user terminal is IDLE, to obtain the power consumption during the holding of the wakelock when the application works in the background; and for each application, calculate a product of a quantity of bytes of accumulated data traffic generated when the application works in the background and power consumption of a single byte, to obtain the power consumption during the occurrence of the data traffic when the application works in the background.

With reference to the second aspect, in a third possible implementation manner, the calculating module is specifically configured to detect, by using a system framework layer, the wakelock occupying time of each application in the user terminal in the case in which the screen is turned off.

According to a fourth aspect, an embodiment of the present invention provides a user terminal, where the user terminal includes the foregoing apparatus for clearing a malicious power-consuming application.

Beneficial effects of the embodiments of the present invention include:
According to the method and the apparatus for clearing a malicious power-consuming application, and the user terminal provided by the embodiments of the present invention, background working power consumption of each application that is running in a user terminal is periodically calculated; an application whose background working power consumption is not less than a power consumption threshold is determined as a malicious power-consuming application; and wakelock (wakelock) occupying time of each application in the user terminal in a case in which
a screen is turned off is periodically calculated, and if an application whose wakelock occupying time is not less than a time threshold is a background working application, the application is determined as a malicious power-consuming application. These applications are applications that improperly occupy resources in the background, but are not applications that consume much power but are normally used by a user, so that the malicious power-consuming applications are accurately identified and detected, and unnecessary power consumption of the user terminal is avoided while user experience is ensured, thereby saving electric energy, and improving a battery endurance capability of the user terminal to some extent.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for clearing a malicious power-consuming application;
FIG. 2 is a flow block diagram of an instance;
FIG. 3 is a schematic diagram of a UI interface of a high power consumption application;
FIG. 4 is a first schematic structural diagram of an apparatus for clearing a malicious power-consuming application; and
FIG. 5 is a second schematic structural diagram of an apparatus for clearing a malicious power-consuming application.

### DESCRIPTION OF EMBODIMENTS

Specific implementation manners of the method and the apparatus for clearing a malicious power-consuming application, and a user terminal provided by the embodiments of the present invention are described below with reference to the accompanying drawings of this specification.

First, the method for clearing a malicious power-consuming application provided by an embodiment of the present invention is described in detail.

Based on the manner in which an application consumes power maliciously in an existing user terminal, it is found that a malicious power-consuming application generally may consume power of a user terminal in the following two manners:
One manner is that in a case in which the user terminal is normally used, an application improperly uses resources in the background, which causes high power consumption; and
the other manner is that in a situation that a screen is turned off (that is, a situation that a user does not need to use a mobile phone, which is also referred to as a situation of a black screen), a background application continuously holds a wakelock (wakelock, where a Wakelock is a lock mechanism, and as long as an application program holds a Wakelock, the system cannot enter a sleep state), so that the system cannot sleep, which causes malicious power consumption.

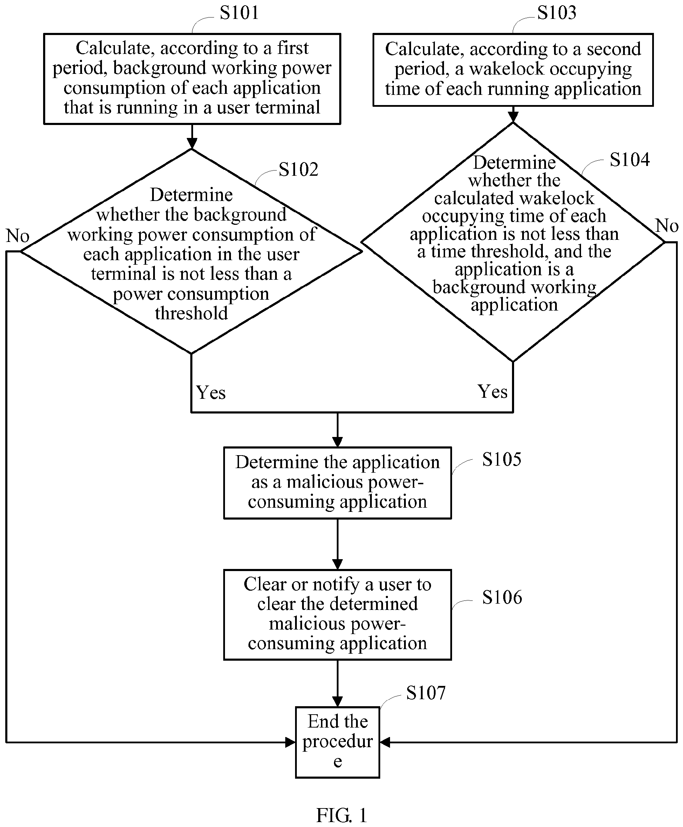

Therefore, for the foregoing two manners, to accurately detect a malicious power-consuming application (which is not a normal application required by the user), a method for clearing a malicious power-consuming application is disclosed. As shown in FIG. 1, the method specifically includes the following steps:
S101: Calculate, according to a first period, background working power consumption of each application that is running in a user terminal.
S102: Determine whether the background working power consumption of each application that is running in the user terminal is not less than a power consumption threshold (which is referred to as a first power consumption threshold below for ease of description), and if yes, perform the following step S105; and if not, go to the following step S107.
S103: Calculate, according to a second period, a wakelock occupying time of each running application.
S104: Determine whether the calculated wakelock occupying time of each application is not less than a time threshold, and the application is a background working application; and if yes, go to step S105; and if not, go to the following step S107.
S105: Determine the application as a malicious power-consuming application, and then perform the following step S106.
S106: Clear or instruct a user to clear the determined malicious power-consuming application.
S107: End the procedure.

In the foregoing procedure, S101 to S102, and S103 to S104 are two independent manners for detecting a malicious power-consuming application, and one of the two manners may be selected and implemented, or both of the two manners may be implemented. During specific implementation, if both of the two manners are implemented, the two manners may be implemented simultaneously or sequentially.

In the foregoing procedure, the first period and the second period are not timed according to physical time, but preferably are timed according to a working period excluding a sleep period of a CPU of the user terminal.

Because malicious power consumption of an application in a user terminal is different from power consumption during normal use of a user, a malicious power consumption manner includes but is not limited to that: an application frequently applies for an RTC to wake up the CPU, and data traffic occurs after the CPU is woken up; an application holds a wakelock for a long time in a case in which a screen is turned off, and the like. Therefore, accumulated power consumption during occupation of the CPU of the user terminal when an application works in the background may be calculated based on the several manners in which an application consumes power maliciously in the background.

Further, in the foregoing step S101, the calculating background working power consumption of each application that is running in a user terminal may specifically be implemented in the following manner:
starting from a moment when a last time of charging the user terminal ends, for each running application, periodically calculating, according to the first period, power consumption during occupation of the CPU of the user terminal, power consumption during holding of a wakelock, and power consumption during occurrence of data traffic when the running application works in the background; and
calculating a sum of the power consumption during the occupation of the CPU of the user terminal, the power consumption during the holding of the wakelock, and the power consumption during the occurrence of the data traffic, as the background working power consumption of each application that is running in the user terminal.

In a special case, because many existing user terminals can be charged through a USB interface when being connected to a PC, when a user connects the user terminal to the PC to perform a short time operation (such as downloading and/or uploading a multimedia file, or updating an application program) on the user terminal, the PC may charge the user terminal through, for example, the USB interface. However, in this case, the user may not need to charge the user terminal, and the user terminal is slightly charged. To avoid impact on performance of the user terminal caused by frequently calculating the power consumption accumulated when each application works in the background, even if the user ends the operation on the user terminal and USB charging is ended accordingly, the end of charging is not determined as a real "end of charging" if a USB charge level at this time is less than a set threshold or a charging time is less than a set duration, and an operation of periodically calculating, according to the first period, power consumption during occupation of the CPU of the user terminal, power consumption during holding of a wakelock, and power consumption during occurrence of data traffic when the application that is running in the user terminal works in the background is not triggered.

Further, the foregoing step of calculating power consumption during occupation of the CPU of the user terminal when each application works in the background is specifically implemented by using the following step:
for each application, calculating a product of an accumulated working duration for which the application works in the background and occupies the CPU and unit-time power consumption of a corresponding frequency (that is, CPU power consumption = CPU background working time x Unit-time power consumption of a corresponding frequency), to obtain the power consumption during the occupation of the CPU of the user terminal when the application works in the background.

Further, the calculating power consumption during the holding of a wakelock when each application works in the background is specifically implemented by using the following step:
for each application, calculating a product of a duration for which the CPU of the user terminal is IDLE when the application works in the background and unit-time power consumption when the CPU of the user terminal is IDLE (Power consumption during holding of a wakelock = Accumulated duration for which the CPU is IDLE x Unit-time power consumption when the CPU is IDLE), to obtain the power consumption during the holding of the wakelock when the application works in the background.

Further, the calculating power consumption during occurrence of data traffic when each application works in the background is specifically implemented by using the following step:
for each application, calculating a product of a quantity of bytes of accumulated data traffic generated when the application works in the background and power consumption of a single byte, to obtain the power consumption during the occurrence of the data traffic when the application works in the background.

For a common user terminal, such as a mobile phone, or a tablet computer that can be connected to a wireless network, a source of accumulated data traffic generated when the application works in the background is mainly a sum of traffic generated by the user terminal by using a wireless local area network such as a wireless fidelity (Wireless Fidelity, WIFI) network and data traffic generated by the user terminal by using an operator network such as a 2G or 3G network.

Further, in the foregoing step S103, the wakelock occupying time of each application may be detected by using a system framework (Framework) layer. Once it is found that the wakelock occupying time is not less than a time threshold (for example, 15 minutes), the application is determined as a malicious power-consuming application. The specific detection manner belongs to the prior art, and is not described herein again.

Further, in a possible implementation manner, before performing the foregoing step S106, the following steps may also be performed:
determining, according to a locally saved list of applications selected by the user to be ignored in processing, whether the malicious power-consuming application that is determined in steps S101 to S102 and steps S103 to S104 was selected by the user to be ignored in processing; and
if yes, neither clearing the application nor sending a notification about the malicious power-consuming application; and if not, performing the subsequent step of clearing or instructing the user to clear the determined malicious power-consuming application.

In still another situation, if calculated background working power consumption of an application is extremely large, that is, if the application is an extraordinarily malicious power-consuming application, it is not required to determine a condition such as whether the malicious power-consuming application is ignored, and a notification of the malicious power-consuming application is directly sent to the user. Specifically, after it is determined, by means of calculation, that the background working power consumption of the application is greater than a first power consumption threshold, before the determining whether the malicious power-consuming application is selected by the user to be ignored in processing, the following step may also be performed:
determining whether the background working power consumption of the application is not less than a greater power consumption threshold (which is referred to as a second power consumption threshold below for ease of description), where the second power consumption threshold is greater than the first power consumption threshold, for example, the first power consumption threshold is 10 maH, and the second power consumption threshold is 50 maH; and
if yes, immediately instructing the user to clear the application; and
if not, performing the foregoing step of determining whether the malicious power-consuming application was ignored in processing by the user.

Further, in the foregoing step S106, the determined malicious power-consuming application may be directly cleared in the following case:
it is found that the determined malicious power-consuming application is in a saved blacklist of malicious power-consuming applications, and was marked as being manually cleared.

A clearing process includes an operation of closing the malicious power-consuming application and/or uninstalling the malicious power-consuming application.

In the foregoing step S106, the process of instructing the user to clear the application includes:
ranking determined malicious power-consuming applications according to the power consumption or the wakelock occupying time, to generate a list of the malicious power-consuming applications, and sending, to the user, a notification message carrying the list of the malicious power-consuming applications;
when receiving an instruction for ignoring the malicious power-consuming applications that is returned by the user, using malicious power-consuming applications that are selected by the user to be ignored in processing to update the locally saved list of applications selected by the user to be ignored in processing; or
when receiving an instruction for clearing the malicious power-consuming applications that is returned by the user, stopping running or uninstalling malicious power-consuming applications that are selected by the user, and marking the malicious power-consuming applications as having been manually cleared.

Preferably, to avoid frequently instructing the user of the list of the malicious power-consuming applications in a short period of time, and avoid affecting user experience of a normal application in the user terminal, in this embodiment, a notification sending frequency may be properly reduced on the following conditions:
each list of malicious power-consuming applications detected and generated according to the first period is saved for a set time, and is deleted after the set time elapses;
in addition, before the notification message carrying the list of the malicious power-consuming applications is sent, a saved list of malicious power-consuming applications generated in this period is compared with a list of malicious power-consuming applications generated in a last period, and if the two lists include same malicious power-consuming applications (ranking may be different), sending of the notification message is suspended; and
if an interval between a moment when the notification message carrying the list of the malicious power-consuming applications is sent this time and a moment when the notification message carrying the list of the malicious power-consuming applications is sent last time is less than a time interval (for example, 4 hours), sending of the notification message is suspended.

In this way, under the premise of ensuring that the malicious power-consuming applications are effectively detected, the frequency of sending the notification message of the malicious power-consuming applications can be properly reduced, to avoid interference to the process in which the user normally uses the user terminal.

Preferably, in some cases, detecting and finding malicious power-consuming applications of a user terminal in time is quite necessary for prolonging normal service time of the user terminal, for example, when a battery level of the user terminal is less than a relatively small battery level threshold (for example, 20%), or when the user actively sends an instruction for viewing a background application list, the operation of calculating background working power consumption of each application that is running in the current user terminal and/or a wakelock occupying time of each application that is running in the current user terminal in a case in which the screen is turned off is triggered.

An application whose power consumption is not less than the first power consumption threshold and/or a background application whose wakelock occupying time in the user terminal in the case in which the screen is turned off is not less than the time threshold is determined as a malicious power-consuming application.

Determined malicious power-consuming applications are ranked according to the power consumption or the wakelock occupying time, to generate a list of the malicious power-consuming applications, and a notification message carrying the list of the malicious power-consuming applications is sent to the user.

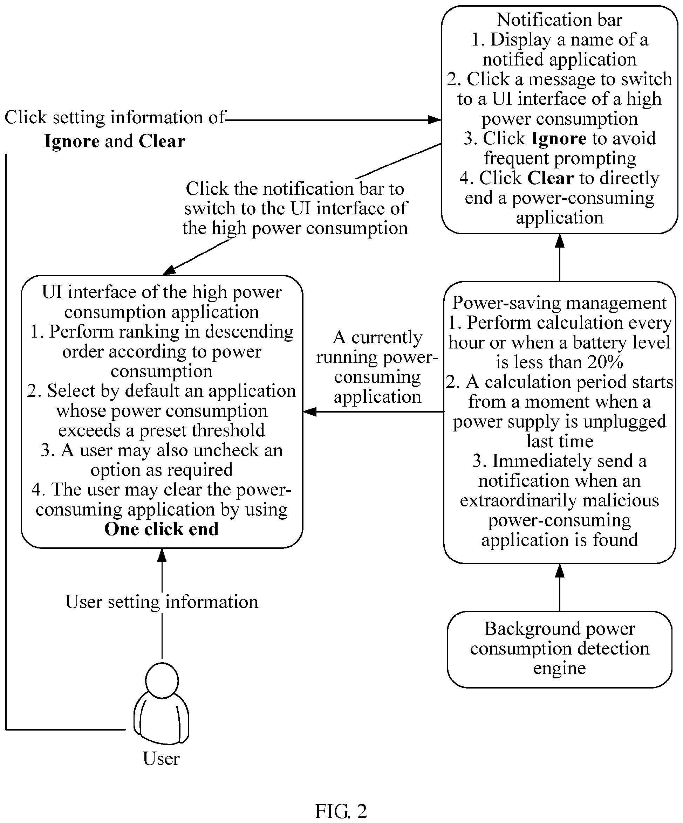

To better describe the foregoing method for clearing a malicious power-consuming application provided by this embodiment, description is provided below by using a flow block diagram of an instance shown in FIG. 2.

A background working power consumption detection engine in the user terminal for detecting a malicious power-consuming application calculates, starting from a moment when a last time of charging the user terminal ends (for example, a charging power supply of the user terminal is unplugged), accumulated power consumption during background working of each application in the user terminal every hour; when a battery level of the user terminal is less than 20%, calculates background working power consumption of each application that is running in the user terminal; and determines malicious power-consuming applications (if an extraordinarily malicious power-consuming application is found, immediately sends a notification message to the user).

When a condition of sending a notification message is met (for example, compared with a last time, the malicious power-consuming applications in a list of malicious power-consuming applications change, and more than 4 hours has passed since a last time a notification message is sent), a corresponding notification bar message is sent to the user, where the notification bar message notifies the user that several malicious power-consuming applications are detected and brief information such as icons of the malicious power-consuming applications are enumerated. If the user clicks the message, switch to a user interface (User Interface, UI) of a high power consumption application; if the user directly clicks "Ignore the message" in the notification bar message, a frequency of sending a notification bar message subsequently is further reduced, so that frequent prompting is avoided; if the user clicks "Clear", running of the determined malicious power-consuming applications is directly stopped.

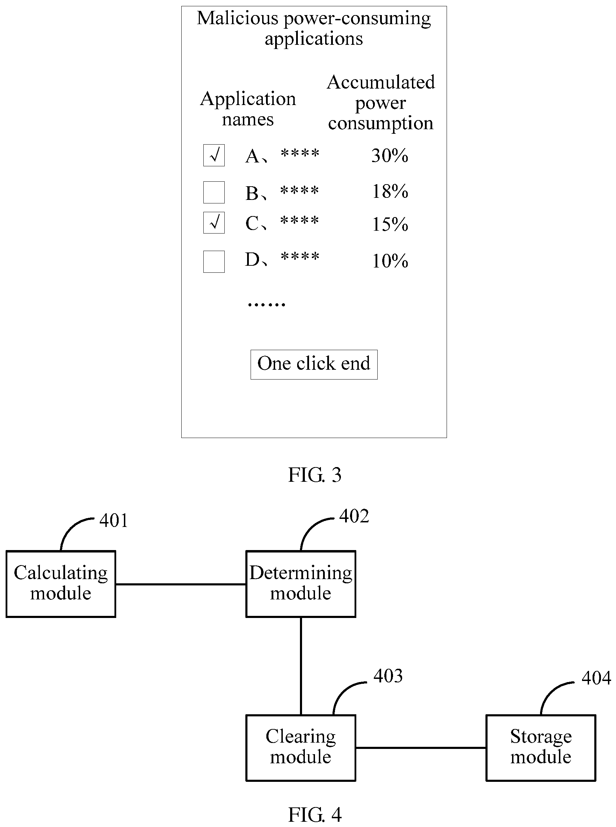

After the UI interface of the high power consumption application is entered, as shown in FIG. 3, the interface displays a list of malicious power-consuming applications that are ranked according to power consumption in descending order (the applications in the list are applications whose background working power consumption is not less than a set power consumption threshold by default), provides power consumption information related to each malicious power-consuming application, and selects several high power consumption applications by default. Certainly, the interface also provides a corresponding check box for each application in the list, so that the user may deselect an application in the list as required, and select "One click end" to clear the power-consuming applications.

Because principles of the apparatus and the user terminal for resolving problems are similar to those of the foregoing method for clearing a malicious power-consuming application, for implementation of the apparatus and the user terminal, refer to implementation of the foregoing method for clearing a malicious power-consuming application, and repeated parts are not described again.

In a first possible implementation manner of the apparatus for clearing a malicious power-consuming application as shown in FIG. 4, the apparatus includes:
a calculating module 401, configured to calculate, according to a first period, background working power consumption of each application that is running in a user terminal; and calculate, according to a second period, a wakelock occupying time of each application that is running in the user terminal in a case in which a screen is turned off;
a determining module 402, configured to determine whether the background working power consumption of each application calculated by the calculating module 401 is not less than a power consumption threshold (which is referred to as a first power consumption threshold below for ease of description), and if yes, determine the application as a malicious power-consuming application; and determine whether the accumulated wakelock occupying time of each application calculated by the calculating module 401 is not less than a time threshold, and if yes, and the application is a background working application, determine the application as a malicious power-consuming application; and
a clearing module 403, configured to clear or instruct a user to clear the determined malicious power-consuming application.

Further, the calculating module 401 is specifically configured to: starting from a moment when a last time of charging the user terminal ends, for each running application, periodically calculate, according to the first period, power consumption during occupation of a CPU of the user terminal, power consumption during holding of a wakelock, and power consumption during occurrence of data traffic when the running application works in the background; and calculate a sum of the power consumption during the occupation of the CPU of the user terminal, the power consumption during the holding of the wakelock, and the power consumption during the occurrence of the data traffic, as the background working power consumption of each application that is running in the user terminal.

Further, the calculating module 401 is specifically configured to: for each application, calculate a product of an accumulated working duration for which the application works in the background and occupies the CPU and unit-time power consumption of a corresponding frequency, to obtain the power consumption during the occupation of the CPU of the user terminal when the application works in the background; for each application, calculate a product of an accumulated duration for which the CPU of the user terminal is IDLE when the application works in the background and unit-time power consumption when the CPU of the user terminal is IDLE, to obtain the power consumption during the holding of the wakelock when the application works in the background; and for each application, calculate a product of a quantity of bytes of accumulated data traffic generated when the application works in the background and power consumption of a single byte, to obtain the power consumption during the occurrence of the data traffic when the application works in the background.

Further, the calculating module 401 is specifically configured to detect, by using a system framework layer, the wakelock occupying time of each application in the user terminal in the case in which the screen is turned off.

Further, the calculating module 401 is specifically configured to time the first period and the second period according to a working period excluding a sleep period of the CPU.

Further, the clearing module 403 is further configured to: before clearing or instructing the user to clear the determined malicious power-consuming application, determine, according to a locally saved list of applications selected by the user to be ignord in processing, whether the malicious power-consuming application was selected by the user to be ignord in processing; and if not determine that the subsequent step of clearing or instructing the user to clear the determined malicious power-consuming application is to be performed.

Further, the clearing module 403 is further configured to: when calculated background working power consumption of an application is greater than the first power consumption threshold, before determining whether the malicious power-consuming application was selected by the user to be ignored in processing, determine whether the calculated background working power consumption is not less than a set power consumption threshold (which is referred to as a second power consumption threshold below for ease of description), where the second power consumption threshold is greater than the first power consumption threshold; if yes, instruct the user to clear the application; and if not, perform the step of determining whether the malicious power-consuming application was ignored in processing by the user.

Further, as shown in FIG. 4, the apparatus for clearing a malicious power-consuming application further includes: a storage module 404, configured to store a list of malicious power-consuming applications that are selected by the user to be ignored in processing.

Correspondingly, the clearing module 403 is specifically configured to rank determined malicious power-consuming applications according to the power consumption or the wakelock occupying time, to generate a list of the malicious power-consuming applications, and send, to the user, a notification message carrying the list of the malicious power-consuming applications; when receiving an instruction for ignoring the malicious power-consuming applications that is returned by the user, use the malicious power-consuming applications that are selected by the user to be ignored in processing to update the list of the applications selected by the user to be ignored in processing that is saved by the storage module 404; and when receiving an instruction for clearing the malicious power-consuming applications that is returned by the user, stop running or uninstall the malicious power-consuming applications that are selected by the user, and mark the malicious power-consuming applications as having been manually cleared.

Further, the storage module 404 is further configured to save, for a set time, each list of malicious power-consuming applications that is generated according to the first period.

Correspondingly, the clearing module 403 is further configured to: before the step of sending, to the user, a notification message carrying the list of the malicious power-consuming applications, compare a list of malicious power-consuming applications that is generated in this period and saved by the storage module 404 with a list of malicious power-consuming applications that is generated in a last period and saved by the storage module 404, and if the two lists include same malicious power-consuming applications, suspend sending the notification message; if the two lists include different malicious power-consuming applications, go to the step of sending, to the user, a notification message carrying the list of the malicious power-consuming applications that is generated in this period.

Further, the calculating module 401 is further configured to: when a battery level of the user terminal is less than a battery level threshold, or when the user sends an instruction for viewing a list of background power-consuming applications, trigger an operation of calculating background working power consumption of each application that is running in the current user terminal and/or a wakelock occupying time of each application in the current user terminal in the case in which the screen is turned off.

Correspondingly, the determining module 402 is further configured to: when a battery level of the user terminal is less than a battery level threshold, or when the user sends an instruction for viewing a list of background power-consuming applications, determine an application whose current background working power consumption is not less than the first power consumption threshold and/or a background application whose wakelock occupying time in the user terminal in the case in which the screen is turned off is not less than the time threshold as a malicious power-consuming application.

Correspondingly, the clearing module 403 is further configured to: when a battery level of the user terminal is less than a battery level threshold, or when the user sends an instruction for viewing a list of background power-consuming applications, rank determined malicious power-consuming applications according to the power consumption or the wakelock occupying time, to generate a list of the malicious power-consuming applications, and send, to the user, a notification message carrying the list of the malicious power-consuming applications.

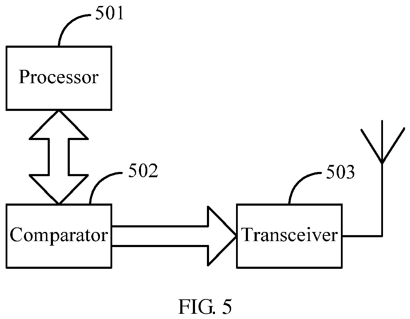

In a second possible implementation manner of the apparatus for clearing a malicious power-consuming application as shown in FIG. 5, the apparatus includes:
a processor 501, configured to calculate, according to a first period, background working power consumption of each application that is running in a user terminal; calculate, according to a second period, a wakelock occupying time of each application that is running in the user terminal in a case in which a screen is turned off; when a comparator 502 determines that background working power consumption of an application is not less than a first power consumption threshold, determine the application as a malicious power-consuming application, and when the comparator 502 determines that wakelock occupying time of an application is not less than a time threshold, determine the application as a malicious power-consuming application; and clear the determined power-consuming application, or send, by using a transceiver, a notification to a user to clear the determined power-consuming application; and
the comparator 502, configured to determine whether the background working power consumption of each application calculated by the processor 501 is not less than the first power consumption threshold, and determine whether the wakelock occupying time of each application calculated by the processor 501 is not less than the time threshold; and
the transceiver 503, configured to send a notification to the user to clear the determined malicious power-consuming application.

According to the method and the apparatus for clearing a malicious power-consuming application, and the user terminal, background working power consumption of each application in a user terminal is periodically calculated, an application whose background working power consumption is not less than a power consumption threshold is determined as a malicious power-consuming application; and a wakelock occupying time of each application in the user terminal in a case in which a screen is turned off is periodically calculated, and if an application whose wakelock occupying time is not less than a time threshold is a background working application, the application is determined as a malicious power-consuming application. These applications are applications that improperly occupy resources in the background, but are not applications that consume much power but are normally used by a user, so that the malicious power-consuming applications are accurately identified and detected, and unnecessary power consumption of the user terminal is avoided while user experience is ensured, thereby saving electric energy, and improving a battery endurance capability of the user terminal to some extent.

According to the descriptions of the foregoing implementation manners, a person skilled in the art may clearly understand that the embodiments of the present invention may be implemented by using hardware, or may be implemented in a manner of software plus a necessary general hardware platform. Based on such an understanding, the technical solutions of the present invention may be implemented in a form of a software product. The software product may be stored in a non-volatile storage medium (which may be a CD-ROM, a USB flash drive, a removable hard disk, or the like) and includes several instructions for instructing a computer device (which may be a personal computer, a server, a network device, or the like) to execute the methods described in the embodiments of the present invention.

A person skilled in the art may understand that the accompanying drawings are merely schematic diagrams of exemplary embodiments, and modules or processes in the accompanying drawings are not necessarily required for implementing the present invention.

A person skilled in the art may understand that the modules in the apparatuses provided in the embodiments may be arranged in the apparatuses in a distributed manner according to the description of the embodiments, or may be arranged in one or more apparatuses which are different from those described in the embodiments. The modules in the foregoing embodiments may be combined into one module, or split into a plurality of submodules.

The sequence numbers of the foregoing embodiments of the present invention are merely for illustrative purposes, and are not intended to indicate priorities of the embodiments.

Obviously, a person skilled in the art can make various modifications and variations to the present invention without departing from the scope of the present invention. The present invention is intended to cover these modifications and variations provided that they fall within the scope of protection defined by the following claims.

## Claims

1. A method for clearing a malicious power-consuming application, comprising:
calculating (S101), according to a first period, background working power consumption of each application that is running in a user terminal, and when the background working power consumption of an application is not less than a power consumption threshold, determining (S105) the corresponding application as a malicious power-consuming application; and/or
calculating (S103), according to a second period, a wakelock occupying time of each application that is running in the user terminal in a case in which a screen is turned off, and when the wakelock occupying time of an application is not less than a time threshold, and the corresponding application is a background working application, determining (S105) the application as a malicious power-consuming application; and
instructing (S106) a user to clear the determined malicious power-consuming application,
wherein instructing (S106) the user to clear the application includes:
ranking determined malicious power-consuming applications according to the power consumption or the wakelock occupying time, to generate a list of the malicious power-consuming applications, and sending, to the user, a notification message carrying the list of the malicious power-consuming applications;
when receiving an instruction for ignoring the malicious power-consuming applications that is returned by the user, using malicious power-consuming applications that are selected by the user to be ignored in processing to update a locally saved list of applications selected by the user to be ignored in processing; or
when receiving an instruction for clearing the malicious power-consuming applications that is returned by the user, stopping running or uninstalling malicious power-consuming applications that are selected by the user, and marking the malicious power-consuming applications as having been manually cleared, and
wherein each list of malicious power-consuming applications detected and generated according to a period is saved for a set time, and is deleted after the set time elapses;
before the notification message carrying the list of the malicious power-consuming applications is sent, a saved list of malicious power-consuming applications generated in this period is compared with a list of malicious power-consuming applications generated in a previous period, and if the two lists include same malicious power-consuming applications, sending of the notification message is suspended; and
if an interval between a moment when the notification message carrying the list of the malicious power-consuming applications is sent this time and a moment when the notification message carrying the list of the malicious power-consuming applications is sent a previous time is less than a time interval, sending of the notification message is suspended.

2. The method according to claim 1, wherein the calculating (S101) background working power consumption of each application that is running in a user terminal specifically comprises:
starting from a moment when a last time of charging the user terminal ends, for each running application, periodically calculating, according to the first period, power consumption during occupation of a CPU of the user terminal, power consumption during holding of a wakelock, and power consumption during occurrence of data traffic when the running application works in the background; and
calculating a sum of the power consumption during the occupation of the CPU of the user terminal, the power consumption during the holding of the wakelock, and the power consumption during the occurrence of the data traffic, as the background working power consumption of each running application.

3. The method according to claim 2, wherein the calculating (S101) power consumption during occupation of a CPU of the user terminal when the running application works in the background specifically comprises:
for each application, calculating a product of an accumulated working duration for which the application works in the background and occupies the CPU and unit-time power consumption of a corresponding frequency, to obtain the power consumption during the occupation of the CPU of the user terminal when the application works in the background;
the calculating (S103) power consumption during holding of a wakelock when the running application works in the background specifically comprises:
for each application, calculating a product of an accumulated duration for which the CPU of the user terminal is IDLE when the application works in the background and unit-time power consumption when the CPU of the user terminal is IDLE, to obtain the power consumption during the holding of the wakelock when the application works in the background; and
the calculating power consumption during occurrence of data traffic when the running application works in the background specifically comprises:
for each application, calculating a product of a quantity of bytes of accumulated data traffic generated when the application works in the background and power consumption of a single byte, to obtain the power consumption during the occurrence of the data traffic when the application works in the background.

4. The method according to claim 1, wherein the wakelock occupying time of each application in the user terminal in the case in which the screen is turned off is detected by using a system framework layer.

5. The method according to any one of claims 1 to 4, wherein the first period and the second period are timed according to a working period excluding a sleep period of the CPU.

6. An apparatus for clearing a malicious power-consuming application, comprising:
a calculating module (401), configured to calculate, according to a first period, background working power consumption of each application that is running in a user terminal; and calculate, according to a second period, a wakelock occupying time of each application that is running in the user terminal in a case in which a screen is turned off;
a determining module (402), configured to determine whether the background working power consumption of each application calculated by the calculating module (401) is not less than a power consumption threshold, and if the background working power consumption of an application is not less than a power consumption threshold , determine the corresponding application as a malicious power-consuming application; and determine whether the wakelock occupying time of each application calculated by the calculating module (401) is not less than a time threshold, and if the wakelock occupying time of an application is not less than a time threshold , and the application is a background working application, determine the corresponding application as a malicious power-consuming application; and
a clearing module (403), configured to clear or instruct a user to clear the determined malicious power-consuming application,
wherein the clearing module (403) is further adapted to:
rank determined malicious power-consuming applications according to the power consumption or the wakelock occupying time, to generate a list of the malicious power-consuming applications, and send, to the user, a notification message carrying the list of the malicious power-consuming applications;
when receiving an instruction for ignoring the malicious power-consuming applications that is returned by the user, use malicious power-consuming applications that are selected by the user to be ignored in processing to update a locally saved list of applications selected by the user to be ignored in processing; or
when receiving an instruction for clearing the malicious power-consuming applications that is returned by the user, stop running or uninstalling malicious power-consuming applications that are selected by the user, and mark a malicious power-consuming applications as having been manually cleared, and
wherein each list of malicious power-consuming applications detected and generated according to a period is saved for a set time, and is deleted after the set time elapses;
before the notification message carrying the list of the malicious power-consuming applications is sent, a saved list of malicious power-consuming applications generated in this period is compared with a list of malicious power-consuming applications generated in a previous period, and if the two lists include same malicious power-consuming applications, sending of the notification message is suspended; and
if an interval between a moment when the notification message carrying the list of the malicious power-consuming applications is sent this time and a moment when the notification message carrying the list of the malicious power-consuming applications is sent a previous time is less than a time interval, sending of the notification message is suspended.

7. The apparatus according to claim 6, wherein the calculating module (401) is specifically configured to: starting from a moment when a last time of charging the user terminal ends, for each running application, periodically calculate, according to the first period, power consumption during occupation of a CPU of the user terminal, power consumption during holding of a wakelock, and power consumption during occurrence of data traffic when the running application works in the background; and calculate a sum of the power consumption during the occupation of the CPU of the user terminal, the power consumption during the holding of the wakelock, and the power consumption during the occurrence of the data traffic, as the background working power consumption of each running application.

8. The apparatus according to claim 7, wherein the calculating module (401) is specifically configured to: for each application, calculate a product of an accumulated working duration for which the application works in the background and occupies the CPU and unit-time power consumption of a corresponding frequency, to obtain the power consumption during the occupation of the CPU of the user terminal when the application works in the background; for each application, calculate a product of an accumulated duration for which the CPU of the user terminal is IDLE when the application works in the background and unit-time power consumption when the CPU of the user terminal is IDLE, to obtain the power consumption during the holding of the wakelock when the application works in the background; and for each application, calculate a product of a quantity of bytes of accumulated data traffic generated when the application works in the background and power consumption of a single byte, to obtain the power consumption during the occurrence of the data traffic when the application works in the background.

9. The apparatus according to claim 6, wherein the calculating module (401) is specifically configured to detect, by using a system framework layer, the wakelock occupying time of each application in the user terminal in the case in which the screen is turned off.

10. The apparatus according to any one of claims 6 to 9, wherein the calculating module (401) is specifically configured to time the first period and the second period according to a working period excluding a sleep period of the CPU.

11. A user terminal, wherein the user terminal comprises the apparatus for clearing a malicious power-consuming application according to any one of claims 6 to 10.

## Patentansprüche

1. Verfahren zum Löschen einer bösartigen stromverbrauchenden Anwendung, umfassend:
Berechnen (S101) des Hintergrund-Betriebsstromverbrauchs von jeder in einem Benutzerendgerät ausgeführten Anwendung entsprechend einem ersten Zeitraum, und wenn der Hintergrund-Betriebsstromverbrauch einer in einem Benutzerendgerät ausgeführten Anwendung nicht geringer ist als ein Schwellenwert des Stromverbrauchs, Festlegen (S105) der betreffenden Anwendung als eine bösartige stromverbrauchende Anwendung; und/oder
Berechnen (S103) einer Wakelock-Belegungszeit jeder in dem Benutzerendgerät ausgeführten Anwendung, falls ein Bildschirm ausgeschaltet ist, und wenn die Wakelock-Belegungszeit einer Anwendung nicht geringer ist als ein Zeit-Schwellenwert und die dazugehörige Anwendung eine im Hintergrund laufende Anwendung ist, Festlegen (S105) der Anwendung als eine bösartige stromverbrauchende Anwendung; und
Anweisen (S106) eines Benutzers zum Löschen der ermittelten bösartigen stromverbrauchenden Anwendung,
wobei das Anweisen (S106) des Benutzers zum Löschen der Anwendung aufweist:
Einstufen der festgelegten bösartigen stromverbrauchenden Anwendungen entsprechend dem Stromverbrauch oder der Wakelock-Belegungszeit, um eine Liste der bösartigen stromverbrauchenden Anwendungen zu erstellen, und Senden einer Benachrichtigungsmeldung zum Benutzer, die die Liste der bösartigen stromverbrauchenden Anwendungen trägt;
beim Empfangen einer Anweisung zum Ignorieren der bösartigen stromverbrauchenden Anwendungen, die durch den Benutzer zurückgeleitet wird: Verwenden von bösartigen stromverbrauchenden Anwendungen, die durch den Benutzer ausgewählt werden, um bei der Verarbeitung ignoriert zu werden, um eine lokal gespeicherte Liste von Anwendungen zu aktualisieren, die vom Benutzer als bei der Verarbeitung zu ignorieren ausgewählt wurden; oder
beim Empfangen einer Anweisung zum Löschen der bösartigen stromverbrauchenden Anwendungen, die durch den Benutzer zurückgeleitet wird:
Anhalten der Ausführung oder Deinstallieren von bösartigen stromverbrauchenden Anwendungen, die durch den Benutzer ausgewählt werden, und Markieren der bösartigen stromverbrauchenden Anwendungen als manuell gelöscht, und
wobei jede einem Zeitraum entsprechend detektierte und erzeugte Liste bösartiger stromverbrauchender Anwendungen über eine vorgegebene Zeit gespeichert und nach Ablauf der vorgegebenen Zeit gelöscht wird;
vor dem Senden der die Liste der bösartigen stromverbrauchenden Anwendungen tragenden Benachrichtigungsmeldung eine in diesem Zeitraum erstellte gespeicherte Liste bösartiger stromverbrauchender Anwendungen mit einer in einem vorangegangenen Zeitraum erstellten Liste bösartiger stromverbrauchender Anwendungen verglichen wird, und falls die beiden Listen gleiche bösartige stromverbrauchende Anwendungen aufweisen, das Senden der Benachrichtigungsmeldung suspendiert wird; und
falls ein Intervall zwischen einem Zeitpunkt, zu dem die die Liste der bösartigen stromverbrauchenden Anwendungen tragende Benachrichtigungsmeldung gesendet wird, und einem Zeitpunkt, zu dem die die Liste der bösartigen stromverbrauchenden Anwendungen tragende Benachrichtigungsmeldung zuvor gesendet worden war,
geringer als ein Zeitintervall ist, das Senden der Benachrichtigungsmeldung suspendiert wird.

2. Verfahren nach Anspruch 1, wobei das Berechnen (S101) von Hintergrund-Betriebsstromverbrauch jeder in einem Benutzerendgerät ausgeführten Anwendung im Einzelnen umfasst:
Beginnend ab einem Zeitpunkt, zu dem eine letzte Ladezeit des Benutzerendgeräts endet, periodisches Berechnen für jede ausgeführte Anwendung entsprechend dem ersten Zeitraum des Stromverbrauchs während der Belegung einer CPU des Benutzerendgeräts, des Stromverbrauchs während des Aufrechterhaltens eines Wakelocks und des Stromverbrauchs während des Auftretens von Datenverkehr, wenn die ausgeführte Anwendung im Hintergrund arbeitet; und
Berechnen einer Summe des Stromverbrauchs während der Belegung der CPU des Benutzerendgeräts, des Stromverbrauchs während des Aufrechterhaltens des Wakelocks und des Stromverbrauchs während des Auftretens von Datenverkehr als Hintergrund-Betriebsstromverbrauch jeder ausgeführten Anwendung.

3. Verfahren nach Anspruch 2, wobei das Berechnen (S101) des Stromverbrauchs während der Belegung einer CPU des Benutzerendgeräts, wenn die ausgeführte Anwendung im Hintergrund arbeitet, im Einzelnen umfasst:
für jede Anwendung: Berechnen eines Produkts einer akkumulierten Betriebsdauer, während der die Anwendung im Hintergrund arbeitet und die CPU belegt, und des Zeittakt-Stromverbrauchs einer dazugehörigen Frequenz, um den Stromverbrauch während der Belegung der CPU des Benutzerendgeräts zu erhalten, wenn die Anwendung im Hintergrund arbeitet;
das Berechnen (S103) des Stromverbrauchs während des Aufrechterhaltens eines Wakelocks, wenn die ausgeführte Anwendung im Hintergrund arbeitet, im Einzelnen umfasst:
für jede Anwendung: Berechnen eines Produkts einer akkumulierten Dauer, während der die CPU des Benutzerendgeräts IDLE ist, wenn die Anwendung im Hintergrund arbeitet, und des Zeittakt-Stromverbrauchs, wenn die CPU des Benutzerendgeräts IDLE ist, um den Stromverbrauch während des Aufrechterhaltens des Wakelocks, wenn die Anwendung im Hintergrund arbeitet, zu erhalten; und
das Berechnen des Stromverbrauchs während des Auftretens von Datenverkehr, wenn die ausgeführte Anwendung im Hintergrund arbeitet, im Einzelnen umfasst:
für jede Anwendung: Berechnen eines Produkts einer Menge von Bytes von akkumuliertem Datenverkehr, erzeugt, wenn die Anwendung im Hintergrund arbeitet, und des Stromverbrauchs eines einzelnen Bytes, um den Stromverbrauch während des Auftretens des Datenverkehrs zu erhalten, wenn die Anwendung im Hintergrund arbeitet.

4. Verfahren nach Anspruch 1, wobei die den Wakelock belegende Zeit jeder Anwendung im Benutzerendgerät für den Fall, dass der Bildschirm ausgeschaltet ist, unter Verwendung einer System-Framework-Ebene detektiert wird.

5. Verfahren nach einem der Ansprüche 1 bis 4, wobei der erste Zeitraum und der zweite Zeitraum gemäß einem Betriebszeitraum unter Ausschluss eines Ruhezeitraums der CPU bemessen sind.

6. Vorrichtung zum Löschen einer bösartigen stromverbrauchenden Anwendung, umfassend:
ein Berechnungsmodul (401), ausgelegt zum Berechnen des Hintergrund-Betriebsstromverbrauchs von jeder in einem Benutzerendgerät ausgeführten Anwendung entsprechend einem ersten Zeitraum, und zum Berechnen einer Wakelock-Belegungszeit jeder in dem Benutzerendgerät ausgeführten Anwendung, falls ein Bildschirm ausgeschaltet ist;
ein Bestimmungsmodul (402), ausgelegt zum Ermitteln, ob der durch das Berechnungsmodul (401) berechnete Hintergrund-Betriebsstromverbrauch jeder Anwendung nicht geringer ist als ein Stromverbrauchsschwellenwert, und falls der Hintergrund-Betriebsstromverbrauch einer Anwendung nicht geringer als ein Stromverbrauchsschwellenwert ist, Festlegen der dazugehörigen Anwendung als eine bösartige stromverbrauchende Anwendung; und Ermitteln, ob die durch das Berechnungsmodul (401) berechnete Wakelock-Belegungszeit jeder Anwendung nicht geringer als ein Zeit-Schwellenwert ist, und falls die Wakelock-Belegungszeit einer Anwendung nicht geringer ist als ein Zeit-Schwellenwert und die Anwendung eine Hintergrund-Betriebsanwendung ist, Festlegen der dazugehörigen Anwendung als eine bösartige stromverbrauchende Anwendung; und
ein Löschmodul (403), dafür ausgelegt, die festgelegte bösartige stromverbrauchende Anwendung zu löschen oder einen Benutzer zum Löschen anzuweisen,
wobei das Löschmodul (403) ferner eingerichtet ist zum
Einstufen der festgelegten bösartigen stromverbrauchenden Anwendungen entsprechend dem Stromverbrauch oder der Wakelock-Belegungszeit, um eine Liste der bösartigen stromverbrauchenden Anwendungen zu erstellen, und Senden einer Benachrichtigungsmeldung zum Benutzer, die die Liste der bösartigen stromverbrauchenden Anwendungen trägt;
beim Empfangen einer Anweisung zum Ignorieren der bösartigen stromverbrauchenden Anwendungen, die durch den Benutzer zurückgeleitet wird:
Verwenden von bösartigen stromverbrauchenden Anwendungen, die durch den Benutzer ausgewählt werden, um bei der Verarbeitung ignoriert zu werden, um eine lokal gespeicherte Liste von Anwendungen zu aktualisieren, die vom Benutzer als bei der Verarbeitung zu ignorieren ausgewählt wurden; oder
beim Empfangen einer Anweisung zum Löschen der bösartigen stromverbrauchenden Anwendungen, die durch den Benutzer zurückgeleitet wird:
Anhalten der Ausführung oder Deinstallieren von bösartigen stromverbrauchenden Anwendungen, die durch den Benutzer ausgewählt werden, und Markieren von bösartigen stromverbrauchenden Anwendungen als manuell gelöscht, und
wobei jede einem Zeitraum entsprechend detektierte und erstellte Liste bösartiger stromverbrauchender Anwendungen über eine vorgegebene Zeit gespeichert und nach Ablauf der vorgegebenen Zeit gelöscht wird;
vor dem Senden der die Liste der bösartigen stromverbrauchenden Anwendungen tragenden Benachrichtigungsmeldung eine in diesem Zeitraum erstellte gespeicherte Liste bösartiger stromverbrauchender Anwendungen mit einer in einem vorangegangenen Zeitraum erstellten Liste bösartiger stromverbrauchender Anwendungen verglichen wird, und falls die beiden Listen gleiche bösartige stromverbrauchende Anwendungen aufweisen, das Senden der Benachrichtigungsmeldung suspendiert wird; und
falls ein Intervall zwischen einem Zeitpunkt, zu dem die die Liste der bösartigen stromverbrauchenden Anwendungen tragende Benachrichtigungsmeldung gesendet wird, und einem Zeitpunkt, zu dem die die Liste der bösartigen stromverbrauchenden Anwendungen tragende Benachrichtigungsmeldung zuvor gesendet worden war, geringer als ein Zeitintervall ist, das Senden der Benachrichtigungsmeldung suspendiert wird.

7. Vorrichtung nach Anspruch 6, wobei das Berechnungsmodul (401) im Einzelnen dafür ausgelegt ist, beginnend ab einem Zeitpunkt, zu dem eine letzte Ladezeit des Benutzerendgeräts endet, periodisch entsprechend dem ersten Zeitraum den Stromverbrauch während der Belegung einer CPU des Benutzerendgeräts, den Stromverbrauch während des Aufrechterhaltens eines Wakelocks und den Stromverbrauch während des Auftretens von Datenverkehr, wenn die ausgeführte Anwendung im Hintergrund arbeitet, zu berechnen; und eine Summe des Stromverbrauchs während der Belegung der CPU des Benutzerendgeräts, des Stromverbrauchs während des Aufrechterhaltens des Wakelocks und des Stromverbrauchs während des Auftretens des Datenverkehrs als Hintergrund-Betriebsstromverbrauch jeder ausgeführten Anwendung zu berechnen.

8. Vorrichtung nach Anspruch 7, wobei das Berechnungsmodul (401) im Einzelnen dafür ausgelegt ist, für jede Anwendung ein Produkt einer akkumulierten Betriebsdauer, während der die Anwendung im Hintergrund arbeitet und die CPU belegt, und des Zeittakt-Stromverbrauchs einer entsprechenden Frequenz zu berechnen, um den Stromverbrauch während der Belegung der CPU des Benutzerendgeräts zu erhalten, wenn die Anwendung im Hintergrund arbeitet; für jede Anwendung ein Produkt einer akkumulierten Betriebsdauer, während der die CPU des Benutzerendgeräts IDLE ist, wenn die Anwendung im Hintergrund arbeitet, und des Zeittakt-Stromverbrauchs, wenn die CPU des Benutzerendgeräts IDLE ist, zu berechnen, um den Stromverbrauch während des Aufrechterhaltens des Wakelocks, wenn die Anwendung im Hintergrund arbeitet, zu erhalten; und für jede Anwendung ein Produkt einer Menge von Bytes von akkumuliertem Datenverkehr zu berechnen, erzeugt, wenn die Anwendung im Hintergrund arbeitet; und des Stromverbrauchs eines einzelnen Bytes, um den Stromverbrauch während des Auftretens des Datenverkehrs zu erhalten, wenn die Anwendung im Hintergrund arbeitet.

9. Vorrichtung nach Anspruch 6, wobei das Berechnungsmodul (401) im Einzelnen ausgelegt ist zum Detektieren der Wakelock-Belegungszeit jeder Anwendung in dem Benutzerendgerät unter Verwendung einer System-Framework-Ebene, falls der Bildschirm ausgeschaltet ist.

10. Vorrichtung nach einem der Ansprüche 6 bis 9, wobei das Berechnungsmodul (401) im Einzelnen ausgelegt ist zum Bemessen des ersten Zeitraums und des zweiten Zeitraums gemäß einem Betriebszeitraum unter Ausschluss eines Ruhezeitraums der CPU.

11. Benutzerendgerät, wobei das Benutzerendgerät die Vorrichtung zum Löschen einer bösartigen stromverbrauchenden Anwendung nach einem der Ansprüche 6 bis 10 umfasst.

## Revendications

1. Procédé de suppression d'une application consommatrice d'énergie malveillante, consistant à :
calculer (S101), selon une première période, une consommation d'énergie de travail en arrière-plan de chaque application qui est en cours d'exécution sur un terminal d'utilisateur, et quand la consommation d'énergie de travail en arrière-plan d'une application n'est pas inférieure à un seuil de consommation d'énergie, déterminer (S105) l'application correspondante comme étant une application consommatrice d'énergie malveillante ; et/ou
calculer (S103), selon une seconde période, un temps d'occupation de verrouillage d'éveil de chaque application qui est en cours d'exécution sur le terminal d'utilisateur, si un écran est éteint, et quand le temps d'occupation de verrouillage d'éveil d'une application n'est pas inférieur à un seuil de temps et l'application correspondante est une application de travail en arrière-plan ;
déterminer (S105) l'application comme étant une application consommatrice d'énergie malveillante ; et
donner l'instruction (S106) à un utilisateur de supprimer l'application consommatrice d'énergie malveillante,
l'étape consistant à donner l'instruction (S106) à l'utilisateur de supprimer l'application consistant à :
classer des applications consommatrices d'énergie malveillante déterminées selon la consommation d'énergie ou le temps d'occupation de verrouillage d'éveil, afin de générer une liste des applications consommatrices d'énergie malveillante, et envoyer à l'utilisateur un message de notification transportant la liste des applications consommatrices d'énergie malveillante ;
lors de la réception d'une instruction renvoyée par l'utilisateur pour ignorer les applications consommatrices d'énergie malveillante, utiliser des applications consommatrices d'énergie malveillante qui sont sélectionnées par l'utilisateur pour être ignorées dans un traitement pour mettre à jour une liste enregistrée localement d'applications sélectionnées par l'utilisateur pour être ignorées dans le traitement ; ou
lors de la réception d'une instruction renvoyée par l'utilisateur pour supprimer les applications consommatrices d'énergie malveillante, arrêter d'exécuter ou désinstaller les applications consommatrices d'énergie malveillante qui sont sélectionnées par l'utilisateur, et marquer les applications consommatrices d'énergie malveillante comme ayant été supprimées manuellement, et
chaque liste d'applications consommatrices d'énergie malveillante détectée et générée selon une période étant enregistrée pendant une durée définie, et étant supprimée une fois la durée écoulée ;
avant l'envoi du message de notification transportant la liste des applications consommatrices d'énergie malveillante, une liste enregistrée d'applications consommatrices d'énergie malveillante générée pendant cette période étant comparée à une liste d'applications consommatrices d'énergie malveillante générée pendant une période précédente, et si les deux listes incluent les mêmes applications consommatrices d'énergie malveillante, l'envoi du message de notification étant suspendu ; et
si un intervalle entre un moment présent où le message de notification transportant la liste des applications consommatrices d'énergie malveillante est envoyé et un moment précédent où le message de notification transportant la liste des applications consommatrices d'énergie malveillante est envoyé est inférieur à un intervalle de temps, l'envoi du message de notification étant suspendu.

2. Procédé selon la revendication 1, dans lequel le calcul (S101) d'une consommation d'énergie de travail en arrière-plan de chaque application qui est en cours d'exécution sur un terminal d'utilisateur consiste spécifiquement à :
à partir d'un moment où se termine un dernier temps de chargement du terminal d'utilisateur, pour chaque application en cours d'exécution, calculer périodiquement, selon la première période, une consommation d'énergie pendant l'occupation d'une CPU du terminal d'utilisateur, une consommation d'énergie pendant un maintien d'un verrouillage d'éveil et une consommation d'énergie pendant la survenue d'un trafic de données quand l'application en cours d'exécution travaille en arrière-plan ; et
calculer une somme de la consommation d'énergie pendant l'occupation de la CPU du terminal d'utilisateur, la consommation d'énergie pendant le maintien du verrouillage d'éveil et la consommation d'énergie pendant la survenue du trafic de données, comme étant la consommation d'énergie de travail en arrière-plan de chaque application en cours d'exécution.

3. Procédé selon la revendication 2, dans lequel le calcul (S101) de la consommation d'énergie pendant l'occupation d'une CPU du terminal d'utilisateur quand l'application en cours d'exécution travaille en arrière-plan consiste spécifiquement à :
pour chaque application, calculer un produit entre une durée de travail cumulée pendant laquelle l'application travaille en arrière-plan et occupe la CPU et une consommation d'énergie par unité de temps d'une fréquence correspondante, afin d'obtenir la consommation d'énergie pendant l'occupation de la CPU du terminal d'utilisateur quand l'application travaille en arrière-plan ;
le calcul (S103) d'une consommation d'énergie pendant le maintien d'un verrouillage d'éveil quand l'application en cours d'exécution travaille en arrière-plan consiste spécifiquement à :
pour chaque application, calculer un produit entre une durée cumulée pendant laquelle la CPU du terminal d'utilisateur est en repos quand l'application travaille en arrière-plan et une consommation d'énergie par unité de temps quand la CPU du terminal d'utilisateur est en repos, afin d'obtenir la consommation d'énergie pendant le maintien du verrouillage d'éveil quand l'application travaille en arrière-plan ; et
le calcul d'une consommation d'énergie pendant la survenue d'un trafic de données quand l'application en cours d'exécution travaille en arrière-plan consiste spécifiquement à :
pour chaque application, calculer un produit entre un nombre d'octets de trafic de données cumulé générés quand l'application travaille en arrière-plan et une consommation d'énergie d'un seul octet, afin d'obtenir la consommation d'énergie pendant la survenue du trafic de données quand l'application travaille en arrière-plan.

4. Procédé selon la revendication 1, dans lequel le temps d'occupation de verrouillage d'éveil de chaque application sur le terminal d'utilisateur si l'écran est éteint est détecté au moyen d'une couche d'infrastructure de système.

5. Procédé selon l'une quelconque des revendications 1 à 4, dans lequel la première période et la seconde période sont rythmées selon une période de travail excluant une période de repos de la CPU.

6. Appareil de suppression d'une application consommatrice d'énergie malveillante, comprenant :
un module de calcul (401), configuré pour calculer, selon une première période, une consommation d'énergie de travail en arrière-plan de chaque application qui est en cours d'exécution sur un terminal d'utilisateur ; et calculer, selon une seconde période, un temps d'occupation de verrouillage d'éveil de chaque application qui est en cours d'exécution sur le terminal d'utilisateur si un écran est éteint ;
un module de détermination (402), configuré pour déterminer si la consommation d'énergie de travail en arrière-plan de chaque application calculée par le module de calcul (401) n'est pas inférieure à un seuil de consommation d'énergie, et si la consommation d'énergie de travail en arrière-plan d'une application n'est pas inférieure à un seuil de consommation d'énergie, déterminer l'application correspondante comme étant une application consommatrice d'énergie malveillante ;
et déterminer si le temps d'occupation de verrouillage d'éveil de chaque application calculé par le module de calcul (401) n'est pas inférieur à un seuil de temps, et si le temps d'occupation de verrouillage d'éveil d'une application n'est pas inférieur à un seuil de temps et l'application est une application de travail en arrière-plan, déterminer l'application correspondante comme étant une application consommatrice d'énergie malveillante ; et
un module de suppression (403), configuré pour supprimer ou donne l'instruction à un utilisateur de supprimer l'application consommatrice d'énergie malveillante,
le module de suppression (403) étant en outre conçu pour :
classer des applications consommatrices d'énergie malveillante déterminées selon la consommation d'énergie ou le temps d'occupation de verrouillage d'éveil, afin de générer une liste des applications consommatrices d'énergie malveillante, et envoyer à l'utilisateur un message de notification transportant la liste des applications consommatrices d'énergie malveillante ;
lors de la réception d'une instruction renvoyée par l'utilisateur pour ignorer les applications consommatrices d'énergie malveillante, utiliser des applications consommatrices d'énergie malveillante qui sont sélectionnées par l'utilisateur pour être ignorées dans un traitement pour mettre à jour une liste enregistrée localement d'applications sélectionnées par l'utilisateur pour être ignorées dans le traitement ; ou lors de la réception d'une instruction renvoyée par l'utilisateur pour supprimer les applications consommatrices d'énergie malveillante, arrêter d'exécuter ou désinstaller les applications consommatrices d'énergie malveillante qui sont sélectionnées par l'utilisateur, et marquer une application consommatrice d'énergie malveillante comme ayant été supprimée manuellement, et
chaque liste d'applications consommatrices d'énergie malveillante détectée et générée selon une période étant enregistrée pendant une durée définie, et étant supprimée une fois la durée écoulée ;
avant l'envoi du message de notification transportant la liste des applications consommatrices d'énergie malveillante, une liste enregistrée d'applications consommatrices d'énergie malveillante générée pendant cette période étant comparée à une liste d'applications consommatrices d'énergie malveillante générée pendant une période précédente, et si les deux listes incluent les mêmes applications consommatrices d'énergie malveillante, l'envoi du message de notification étant suspendu ; et
si un intervalle entre un moment présent où le message de notification transportant la liste des applications consommatrices d'énergie malveillante est envoyé et un moment précédent où le message de notification transportant la liste des applications consommatrices d'énergie malveillante est envoyé est inférieur à un intervalle de temps, l'envoi du message de notification étant suspendu.

7. Appareil selon la revendication 6, dans lequel le module de calcul (401) est spécifiquement configuré pour : à partir d'un moment où se termine un dernier temps de chargement du terminal d'utilisateur, pour chaque application en cours d'exécution, calculer périodiquement, selon la première période, une consommation d'énergie pendant l'occupation d'une CPU du terminal d'utilisateur, une consommation d'énergie pendant un maintien d'un verrouillage d'éveil et une consommation d'énergie pendant la survenue d'un trafic de données quand l'application en cours d'exécution travaille en arrière-plan ; et calculer une somme de la consommation d'énergie pendant l'occupation de la CPU du terminal d'utilisateur, la consommation d'énergie pendant le maintien du verrouillage d'éveil et la consommation d'énergie pendant la survenue du trafic de données, comme étant la consommation d'énergie de travail en arrière-plan de chaque application en cours d'exécution.

8. Appareil selon la revendication 7, dans lequel le module de calcul (401) est spécifiquement configuré pour : pour chaque application, calculer un produit entre une durée de travail cumulée pendant laquelle l'application travaille en arrière-plan et occupe la CPU et une consommation d'énergie par unité de temps d'une fréquence correspondante, afin d'obtenir la consommation d'énergie pendant l'occupation de la CPU du terminal d'utilisateur quand l'application travaille en arrière-plan ; pour chaque application, calculer un produit entre une durée cumulée pendant laquelle la CPU du terminal d'utilisateur est en repos quand l'application travaille en arrière-plan et une consommation d'énergie par unité de temps quand la CPU du terminal d'utilisateur est en repos, afin d'obtenir la consommation d'énergie pendant le maintien du verrouillage d'éveil quand l'application travaille en arrière-plan ; et pour chaque application, calculer un produit entre un nombre d'octets de trafic de données cumulé générés quand l'application travaille en arrière-plan et une consommation d'énergie d'un seul octet, afin d'obtenir la consommation d'énergie pendant la survenue du trafic de données quand l'application travaille en arrière-plan.

9. Appareil selon la revendication 6, dans lequel le module de calcul (401) est spécifiquement configuré pour détecter, au moyen d'une couche d'infrastructure de système, le temps d'occupation de verrouillage d'éveil de chaque application sur le terminal d'utilisateur si l'écran est éteint.

10. Appareil selon l'une quelconque des revendications 6 à 9, dans lequel le module de calcul (401) est spécifiquement configuré pour rythmer la première période et la seconde période selon une période de travail excluant une période de repos de la CPU.

11. Terminal d'utilisateur, le terminal d'utilisateur comprenant l'appareil de suppression d'une application consommatrice d'énergie malveillante selon l'une quelconque des revendications 6 à 10.
